# EUROPÄISCHE PATENTSCHRIFT

(11) **EP 2 594 462 B1**
(45) Veröffentlichungstag und Bekanntmachung des Hinweises auf die Patenterteilung: **29.06.2016**
(21) Anmeldenummer: 11189137.0
(22) Anmeldetag: 15.11.2011
(51) Int. Cl.: B62D 25/08, B60H 1/28

(54) **Wasserkasten für ein Kraftfahrzeug**
Water chamber for a motor vehicle
Réservoir d'eau pour un véhicule automobile

(43) Veröffentlichungstag der Anmeldung: 22.05.2013
(73) Patentinhaber: Weidplas GmbH, 8640 Rapperswil (CH)
(72) Erfinder: Harke, Stefan, 8832 Wollerau (CH); Novak, Philippe, 8320 Fehraltorf (CH)
(74) Vertreter: Rutz, Andrea

(56) Entgegenhaltungen:
- DE-A1-102005 011 479
- DE-A1-102007 035 489

## Beschreibung

Die Erfindung betrifft einen Wasserkasten für ein Kraftfahrzeug, mit wenigstens einer in Einbaulage oben liegenden Lufteinlassöffnung, die mit einer Wasserabscheidekammer verbunden ist, die eine Bodenwandung, eine Seitenwandung, eine Deckenwandung, wenigstens eine Wasseraustrittsöffnung und wenigstens eine Luftaustrittsöffnung aufweist.

Wasserkästen für Kraftfahrzeuge sind im Stand der Technik in zahlreichen Ausführungen bekannt geworden. Die Wasserabscheidekammer dient hierbei zum Abführen von Schwallwasser, das beispielsweise bei starkem Regen oder in einer Waschanlage durch die Lufteinlassöffnung eintritt. Diese Öffnung ist in der Regel mit einem Gitter abgedeckt und am unteren Rand der Windschutzscheibe angeordnet. In der Regel ist der Wasserkasten unterhalb der Motorhaube angeordnet und beansprucht vergleichsweise ein grosses Volumen.

Die DE-B-10 2004 051 198 offenbart einen Wasserkasten, der eine Wasserabscheidekammer zum Abführen von Schwallwasser und eine dieser Kammer nachgelagerte Tropfenabscheidekammer aufweist. Der Wasserkasten bildet eine Frischluftzuführvorrichtung, bei welcher in der Tropfenabscheidekammer zur Tropfenabscheidung angesaugte Luft entlang einer Kurve umgelenkt wird. In der Tropfenabscheidekammer sind wenigstens zwei Wasserabläufe vorgesehen.

Die DE-C-40 12 568 offenbart einen Wasserkasten, bei dem die Deckenwandung durch die Motorhaube gebildet wird. Ein Teil des Schwallwassers wird durch einen Ablaufstutzen im Boden des Wasserkastens und ein anderer Teil wird über ein im Wasserkasten angeordnetes Abweisprofil einem Ablaufschlauch zugeführt, der an einer Wandung des Wasserkastens angebracht ist. Schwallwasser gelangt durch eine Öffnung der Motorhaube direkt in den Wasserkasten.

Die DE-C-43 03 663 offenbart eine Luftansaugvorrichtung mit einem Wasserkasten, bei dem Schwallwasser teilweise durch eine Öffnung mit einem Gitter und teilweise durch einen Spalt zwischen der unteren Kante der Windschutzscheibe und dem Wasserkasten abgeführt wird. Im Innenraum des Wasserkastens ist ein Leitblech mit einer Wasserrinne angeordnet, die mit einer hier nicht gezeigten Wasserableitung verbunden ist.

Weitere Wasserkästen sind durch die DE-C-42 34 045 und die DE-A-10 2007 013 690 bekannt geworden.

Die DE-A-10 2007 035 489 offenbart eine zweiteilige Wasserkastenanordnung. Einem inneren Wasserkasten ist anströmseitig ein äusserer Wasserkasten vorgelagert. Dieser weist einen Wasserablauf auf, der als Vorabscheideablauf wirkt und einen Teil des Wassers, das in den äusseren Wasserkasten gelangt, abführt, so dass dieses nicht in den inneren Wasserkasten gelangen kann.

Da wie erwähnt die im Stand der Technik bekannten Wasserkästen ein vergleichsweise grosses Volumen aufweisen, ist es vielfach schwierig, diese geeignet zu positionieren.

Der Erfindung liegt die Aufgabe zugrunde, einen Wasserkasten der genannten Art zu schaffen, der die genannten Nachteile vermeidet.

Der erfindungsgemässe Wasserkasten ist dadurch gekennzeichnet, dass die wenigstens eine Lufteinlassöffnung über eine Zuleitung mit der im Wesentlichen geschlossenen Wasserabscheidekammer verbunden ist und dass nach der wenigstens einen Lufteinlassöffnung in der Zuleitung wenigstens ein Vorabscheideablauf angeordnet ist, durch den ausserhalb der im Wesentlichen geschlossenen Wasserabscheidekammer Wasser abführbar ist.

Beim erfindungsgemässen Wasserkasten kann die Lufteinlassöffnung im Wesentlichen unabhängig von der Wasserabscheidekammer positioniert werden. Hierzu ist es lediglich notwendig, die Zuleitung entsprechend in der erforderlichen Länge und Biegung auszubilden. Da Schwallwasser vor der Wasserabscheidekammer vorabgeschieden wird, kann die Wasserabscheidekammer mit einem wesentlich kleineren Volumen als bisher ausgebildet werden. In der Wasserabscheidekammer muss dann lediglich noch das Wasser abgeschieden werden, das tropfenweise aus der Luft abgeschieden wird sowie das noch nicht abgeschiedene Schwallwasser. Da die Wasserabscheidekammer mit einem vergleichsweise kleinen Volumen hergestellt werden kann, ist ihre Positionierung im Motorraum wesentlich einfacher und vorteilhafter als bisher. Entsprechend können die weiteren üblichen Geräte, wie beispielsweise Pumpen und Steuerungen einfacher und günstiger im Motorraum positioniert werden. Der Motorraum kann somit optimaler als bisher genutzt werden.

Der Wasserkasten ist dank der Zuleitung freier positionierbar. Die Abläufe lassen sich so positionieren, dass das abgeschiedene Wasser nicht auf wassersensitive Aggregate trifft. Ein Notablauf ist nicht zwingend. Zudem ist die Verstopfungswahrscheinlichkeit der Wasserabscheidekammer vermindert, insbesondere dann, wenn kein Notablauf vorhanden ist.

Der Vorabscheideablauf kann beispielsweise in einfacher Weise als Stutzen ausgebildet werden, der an der Zuleitung angeformt ist. Der Vorabscheideablauf kann aber auch eine einfache Öffnung in der Zuleitung sein. Der Vorabscheideablauf kann aber auch als Ventil oder dergleichen ausgebildet sein. Selbstverständlich ist es auch möglich, dass die Zuleitung mehr als einen Vorabscheideablauf aufweist. Der Vorabscheideablauf kann zudem lösbar an der Zuleitung befestigt sein.

Die Zuleitung ist vorzugsweise so ausgebildet, dass das Wasser durch Gravitation abgeleitet wird. Die Lufteinlassöffnung ist dann somit höher angeordnet als das Ende der Zuleitung, welche mit einer Seitenwandung und/oder Deckenwandung des Wasserkastens verbunden ist. Zudem ist denkbar, dass in der Zuleitung vor dem Eingang zur Wasserabscheidekammer ein Gitter angeordnet ist.

Die Herstellung des Wasserkastens ist dann besonders kostengünstig, wenn gemäss einer Weiterbildung der Erfindung die Zuleitung durch ein erstes Teil gebildet wird, das lösbar mit einem zweiten Teil verbunden ist und dieses zweite Teil im Wesentlichen die Wasserabscheidekammer bildet. Vorzugsweise ist hierbei die Lufteinlassöffnung an der Zuleitung angeformt. Die Zuleitung kann beispielsweise aus einem geeigneten Kunststoff hergestellt sein. Dies gilt ebenfalls für die Wasserabscheidekammer. Die Zuleitung kann im Wesentlichen starr oder biegbar ausgebildet sein. Die Verbindung zwischen den beiden Teilen kann beispielsweise eine Steckverbindung, ein Schraubverbindung oder eine Bajonettverbindung sein. Die beiden Teile können zudem miteinander verschweisst sein. Die Verbindung kann lösbar oder unlösbar sein.

Nach einer Weiterbildung der Erfindung ist vorgesehen, dass die Wasserabscheidekammer mit einem Sauggebläse einer Klimaanlage verbunden ist und dass mit der Klimaanlage Luft durch die wenigstens eine Lufteinlassöffnung angesaugt wird. Die Zuleitung dient in diesem Fall gleichzeitig als Kanal für den Durchlass der angesaugten Luft. In der Wasserabscheidekammer befindet sich ebenfalls ein Luftkanal und im Wesentlichen eine Tropfenabscheidekammer. Die Luft kann in der Wasserabscheidekammer entlang einer Kurve umgelenkt werden. Eine solche Umlenkung kann insbesondere zum Abscheiden von Wasser aus der Luft dienlich sein.

Die Zuleitung weist an einer Auslassmündung des Vorabscheideablaufs eine nach unten gebogene Wandung auf, an welcher gemäss dem Coandäeffekt Wasser nach unten abführbar ist. Der an sich bekannte Coandäeffekt ermöglicht in diesem Fall eine leistungsfähigere Vorabscheidung von Schwallwasser. Damit kann insbesondere vermieden werden, dass ein wesentlicher Anteil des Schwallwassers in die Wasserabscheidekammer gelangt. Hierzu ist zudem ein Barriereelement dienlich, welches die genannte Auslassmündung teilweise überdeckt.

Die Zuleitung ist nach einer Weiterbildung der Erfindung rohrförmig. Sie kann einen kreisrunden, ovalen oder auch eckigen Querschnitt aufweisen.

Der Wasserkasten ist vorzugsweise aus Kunststoff hergestellt. Er ist vorzugsweise kein Tragteil und auch kein Bestandteil der Karosserie.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: eine schematische Teilansicht eines Kraftfahrzeuges mit einem erfindungsgemässen Wasserkasten,
- Fig. 2: schematisch ein Schnitt durch einen Teil eines erfindungsgemässen Wasserkastens,
- Fig. 3: schematisch ein Schnitt durch einen Wasserkasten gemäss einer Variante,
- Fig. 4: schematisch ein Schnitt durch eine weitere Variante des erfindungsgemässen Wasserkastens und
- Fig. 5: schematisch ein Schnitt durch eine weitere Variante des erfindungsgemässen Wasserkastens.

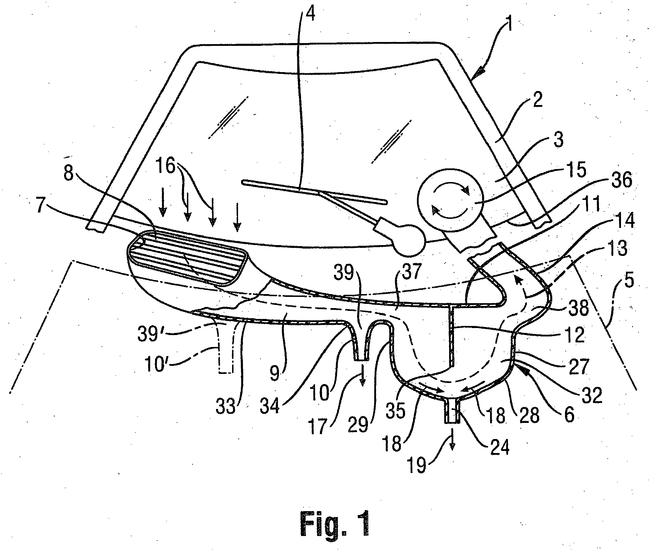

Das in Fig. 1 gezeigte Kraftfahrzeug 1 besitzt in üblicher Weise eine Karosserie 2 mit einer Windschutzscheibe 3 sowie eine Motorhaube 5. Unterhalb der Motorhaube 5 befindet sich ein Wasserkasten 6, der für eine Klimaanlage 15 eine Lufteinlassöffnung 7 aufweist, die beispielsweise zwischen einer Unterkante 36 der Windschutzscheibe 3 und der Motorhaube 5 angeordnet ist. Die Lufteinlassöffnung 7 kann hier aber auch beispielsweise unterhalb der Motorhaube 5 angeordnet sein, die entsprechend eine hier nicht gezeigte Öffnung aufweist. Die Lufteinlassöffnung 7 kann auch Wasser aufnehmen, das beispielsweise als Schwallwasser gemäss den Pfeilen 16 von der Windschutzscheibe 3 nach unten strömt. Das Schwallwasser kann beispielsweise Regenwasser oder auch Wasser einer Waschanlage sein. Auch kann von einem Scheibenwischer 4 nach unten geleitetes Wasser durch die Lufteinlassöffnung 7 abgeführt werden. Die Lufteinlassöffnung 7 ist beispielsweise von einem Gitter 8 abgedeckt, das beispielsweise Laub zurückhält.

Die Klimaanlage 15 kann beispielsweise ein hier nicht gezeigtes Sauggebläse aufweisen, mit dem an der Lufteinlassöffnung 7 Umgebungsluft angesaugt werden kann. Diese Luft gelangt durch einen Kanal 9 einer Zuleitung 33 in eine Wasserabscheidekammer 27 und von dieser durch einen Luftkanal 14 zur Klimaanlage 15. Im Wasserkasten 6 wird die Luft gemäss dem Pfeil 13 an einer unteren Kante 35 eines Leitelementes 12 umgelenkt, das an einer Abdeckung 11 angeformt ist und nach unten in einen Innenraum 32 der Wasserabscheidekammer 27 ragt. In der Wasserabscheidekammer 27 und insbesondere auch am Leitelement 12 wird Wassers abgeschieden, das von der Luft mitgetragen wird. Der Pfeil 13 verdeutlicht die Umlenkung des Luftstromes am Leitelement 12. Das abgeschiedene Wasser fliesst entsprechend den Pfeilen 18 an einer Seitenwandung 29 und einer Bodenwandung 28 entlang zu einem Auslass 24 und schliesslich gemäss einem Pfeil 19 nach aussen.

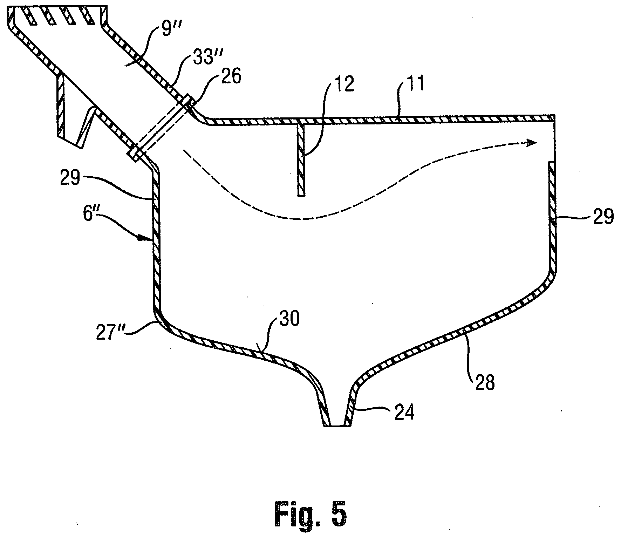

Die Wasserabscheidekammer 27 besitzt eine Einlassöffnung 37 für die angesaugte Luft und eine Auslassöffnung 38 für die Weiterleitung der Luft zur Klimaanlage 15. Mit Ausnahme der Einlassöffnung 37, der Auslassöffnung 38 und dem Auslass 24 ist die Wasserabscheidekammer 27 geschlossen. Der Auslass 24 kann als einfacher Auslassstutzen oder auch als Ventil mit einer Verschlussklappe realisiert sein. Der Auslass 24 ist vorzugsweise an der untersten Stelle einer konischen Innenseite 30 (Fig. 5) der Bodenwandung 28 angeordnet. Der Auslass 24 kann vergleichsweise klein dimensioniert sein, da durch diesen lediglich ein Teil des Schwallwassers und Wasser aus der Luft abgeführt werden muss.

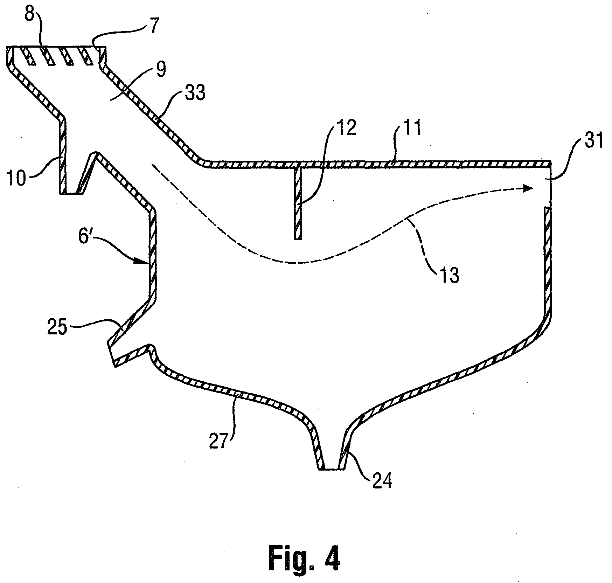

Zusätzlich zum Auslass 24 kann gemäss Fig. 4 ein Notauslass 25 vorgesehen sein. Sollte in der Wasserabscheidekammer 27 das Wasserniveau ansteigen, so wird durch den Notauslass 25 Wasser abgeführt, so dass das Wasserniveau in der Wasserabscheidekammer 27 nicht weiter ansteigt. Es können selbstverständlich auch mehrere solche Notauslasse 25 vorgesehen sein. Ansonsten unterscheidet sich der Wasserkasten 6' grundsätzlich nicht von demjenigen gemäss Fig. 1.

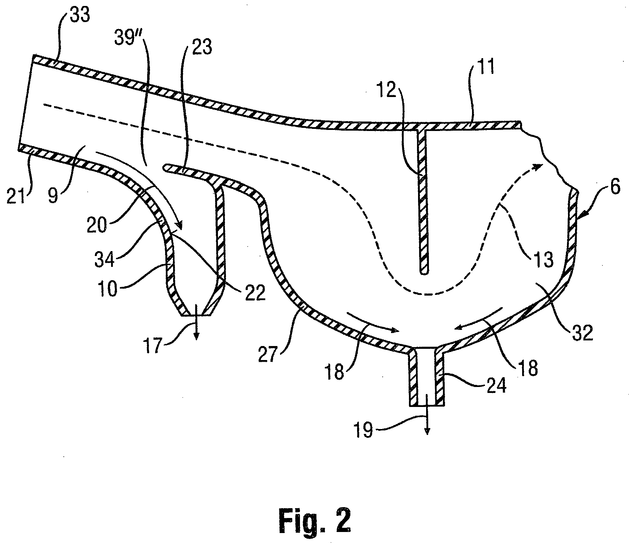

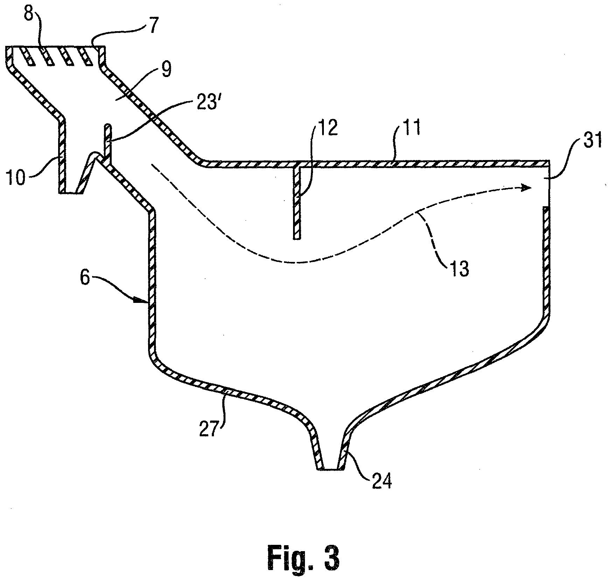

Gelangt beispielsweise Regenwasser oder Waschwasser durch die Lufteinlassöffnung 7 in den Wasserkasten 6, so wird dieses von einem Kanal 9 einer Zuleitung 33 aufgenommen. In Strömungsrichtung gesehen vor der Wasserabscheidekammer 27 besitzt die Zuleitung 33 einen Vorabscheideablauf 10, der eine Öffnung 39 aufweist, durch welche Wasser in den Vorabscheideablauf 10 strömen kann. Dieses Wasser wird gemäss Pfeil 17 durch den Vorabscheideablauf 10 nach unten abgeführt. Im Bereich der Öffnung 39 besitzt der Vorabscheideablauf 10 gemäss Fig. 1 eine bogenförmige Wandung 34. Diese Wandung 34 ist so ausgebildet, dass diese gemäss dem Coandǎeffekt Wasser nach unten leitet. Aufgrund dieses Coandäeffektes kann die Leistung des Vorabscheideablaufes 10 erhöht werden. Um die Wirkung des Vorabscheideablaufes 10 weiter zu erhöhen, kann im Bereich der Öffnung 39 ein Barnereelement 23 vorgesehen sein. Dieses kann sich beispielsweise gemäss Fig. 2 im Wesentlichen horizontal oder gemäss Fig. 3 im Wesentlichen vertikal nach oben erstrecken. Das Barriereelement 23 bzw. 23' verhindert insbesondere, dass Spritzwasser in die Wasserabscheidekammer 27 gelangt. Der Vorabscheideablauf 10 ist somit so ausgebildet, dass möglichst viel Wasser vor der Wasserabscheidekammer 27 nach aussen abgeführt wird. Der Vorabscheideablauf 10 ist vorzugsweise so angeordnet, dass er sich nicht über einem wassersensitiven Aggregat befindet. Denkbar ist aber auch eine Anordnung des Vorabscheideablaufes 10 an einer anderen Stelle der Zuleitung 33, beispielsweise in der Anordnung gemäss Fig. 1. Der Vorabscheideablauf 10' ist hier somit näher bei der Lufteinlassöffnung 7 angeordnet, kann aber ansonst gleich ausgebildet sein wie der Vorabscheideablauf 10. Der Vorabscheideablauf 10' kann hier aber auch ein zusätzlicher zweiter Vorabscheideablauf sein. Es können aber auch mehr als zwei Vorabscheideabläufe 10 und 10' vorgesehen sein. Die Zuleitung 33 kann somit mehrere Öffnungen 39 zum Abscheiden von Schwallwasser aufweisen. In der Zuleitung 33 kann zudem auch wenigstens ein Teil des Wassers abgeschieden werden, das von der angesaugten Luft mitgeführt wird. Die Zuleitung 33 ist beispielsweise im Wesentlichen rohrförmig und besitzt einen kreisförmigen, ovalen oder mehreckigen Querschnitt. Die Zuleitung 33 besitzt eine Wandung 21, die sich von der Lufteinlassöffnung 7 bis zur Einlassöffnung 37 erstreckt. Diese Wandung 21 ist beispielsweise rohrförmig und besitzt im Wesentlichen einen kreisförmigen, ovalen oder vieleckigen Querschnitt.

Die Zuleitung 33 verbindet somit die Lufteinlassöffnung 7 mit der Wasserabscheidekammer 27. Die Zuleitung 33 ermöglicht somit die Lufteinlassöffnung 7 in an sich beliebiger Position im Abstand zur Wasserabscheidekammer 27 anzuordnen. Insbesondere ist es dadurch möglich, die Wasserabscheidekammer 27 an der geeignetsten Stelle anzuordnen. Zudem kann die Wasserabscheidekammer 27 mit einem kleinen Volumen und damit kleiner ausgebildet sein als bisher, da ein wesentlicher Anteil des abzuführenden Wassers bereits vor der Wasserabscheidekammer 27 durch wenigstens einen Vorabscheideablauf 10 abgeführt wird. Die Fig. 1 zeigt eine Lufteinlassöffnung 7 und eine an diese angeschlossene Zuleitung 33. Grundsätzlich können auch mehrere Lufteinlassöffnungen 7 und/oder mehrere Zuleitungen 33 vorgesehen sein.

Die Fig. 2 zeigt doch etwas deutlicher die Wandung 21, die eine Innenseite 22 aufweist, entlang welcher das Wasser in Richtung des Pfeils 20 gemäss dem Coandäeffekt abgeleitet wird. Das Barriereelement 23 hat zudem die Wirkung, dass möglichst wenig Wasser in die Wasserabscheidekammer 27 gelangt.

Der Wasserkasten 6 kann im Wesentlichen einstückig, beispielsweise aus Kunststoff, hergestellt sein. Der in Fig. 5 gezeigte Wasserkasten 6" besitzt eine Zuleitung 33", die separat hergestellt und mit einem Verbindungsmittel 26 mit der Wasserabscheidekammer 27" verbunden ist. Das Verbindungsmittel 26 kann beispielsweise eine Schraubverbindung, eine Steckverbindung, eine Bajonettverbindung oder sonst eine geeignete Verbindung sein. Die Zuleitung 33" kann aber auch mit der Wasserabscheidekammer 27" verschweisst sein. Die separate Herstellung der Zuleitung 33" ermöglicht eine kostengünstigere Herstellung des Wasserkastens 6". Die Zuleitung 33" kann zudem auswechselbar sein. Diese kann zudem aus einem anderen Material hergestellt sein als die Wasserabscheidekammer 27". Schliesslich könnte die Zuleitung 33" zur Reinigung abgenommen werden.

**BEZUGSZEICHENLISTE**

| | | | |
|---|---|---|---|
| 1 | Kraftfahrzeug | 31 | Luftauslass |
| 2 | Karosserie | 32 | Innenraum |
| 3 | Windschutzscheibe | 33 | Zuleitung |
| 4 | Scheibenwischer | 34 | Wandung |
| 5 | Motorhaube | 35 | Kante |
| 6 | Wasserkasten | 36 | Unterkante |
| 7 | Lufteinlassöffnung | 37 | Einlassöffnung |
| 8 | Gitter | 38 | Auslassöffnung |
| 9 | Kanal | 39 | Öffnung |
| 10 | Vorabscheideablauf | | |
| 11 | Deckenwandung | | |
| 12 | Leitelement | | |
| 13 | Pfeil | | |
| 14 | Luftkanal | | |
| 15 | Klimaanlage | | |
| 16 | Pfeil | | |
| 17 | Pfeil | | |
| 18 | Pfeil | | |
| 19 | Pfeil | | |
| 20 | Pfeil | | |
| 21 | Wandung | | |
| 22 | Innenseite | | |
| 23 | Barriereelement | | |
| 24 | Wasseraustrittsöffnung | | |
| 25 | Notauslass | | |
| 26 | Verbindungsmittel | | |
| 27 | Wasserabscheidekammer | | |
| 28 | Bodenwandung | | |
| 29 | Seitenwandung | | |
| 30 | Innenseite | | |

## Patentansprüche

1. Wasserkasten für ein Kraftfahrzeug (1) mit wenigstens einer in Einbaulage oben liegenden Lufteinlassöffnung (7) und mit einer Wasserabscheidekammer (27), die mit der Lufteinlassöffnung (7) verbunden ist und die eine Bodenwandung (28), eine Seitenwandung (29), eine Deckenwandung (11), wenigstens eine Wasseraustrittsöffnung (24) und wenigstens eine Luftaustrittsöffnung (38) aufweist, wobei die wenigstens eine Lufteinlassöffnung (7) über wenigstens eine Zuleitung (33) mit der im Wesentlichen geschlossenen Wasserabscheidekammer (27) verbunden ist, und wobei nach der wenigstens einen Lufteinlassöffnung (7) die Zuleitung (33) wenigstens einen Vorabscheideablauf (10) aufweist, durch den ausserhalb der im Wesentlichen geschlossenen Wasserabscheidekammer (27) Wasser abführbar ist, **dadurch gekennzeichnet, dass** die Zuleitung (33) an einer Öffnung (39') des Vorabscheideablaufs (10) eine nach unten gebogene Wandung (34) aufweist, an welcher gemäss dem Coandäeffekt Wasser nach unten in den Vorabscheideablauf (10) abführbar ist.

2. Wasserkasten nach Anspruch 1, **dadurch gekennzeichnet, dass** der wenigstens eine Vorabscheideablauf (10) in der Zuleitung (33) angeordnet ist.

3. Wasserkasten nach Anspruch 1 oder 2, **dadurch gekennzeichnet, dass** die wenigstens eine Lufteinlassöffnung (7) in Einbaulage über der Wasserabscheidekammer (27) angeordnet ist.

4. Wasserkasten nach einem der Ansprüche 1 bis 3, **dadurch gekennzeichnet, dass** die Zuleitung (33") durch ein erstes Teil gebildet wird, das lösbar mit einem zweiten Teil (27") verbunden ist und dieses zweite Teil (27") im Wesentlichen die Wasserabscheidekammer bildet.

5. Wasserkasten nach einem der Ansprüche 1 bis 4, **dadurch gekennzeichnet, dass** die Zuleitung (33) an der genannten Seitenwandung (29) und/oder an der genannten Deckenwandung (11) an die Wasserabscheidekammer (27) angeschlossen ist.

6. Wasserkasten nach einem der Ansprüche 1 bis 5, **dadurch gekennzeichnet, dass** die Zuleitung (33) am Vorabscheideablauf (10) ein Barriereelement (23) aufweist, an dem Wasser in den Vorabscheideablauf (10) geleitet wird.

7. Wasserkasten nach einem der Ansprüche 1 bis 6, **dadurch gekennzeichnet, dass** an der Deckenwandung (11) wenigstens ein in einen Innenraum (32) der Wasserabscheidekammer (27) ragendes Leitelement (12) zum Umleiten von Luft angeordnet ist, an dem durch die Wasserabscheidekammer (27) durchströmende Luft umgelenkt wird.

8. Wasserkasten nach Anspruch 7, **dadurch gekennzeichnet, dass** sich das Leitelement (12) von der Deckenwandung (11) nach unten in den genannten Innenraum (32) erstreckt.

9. Wasserkasten nach einem der Ansprüche 1 bis 8, **dadurch gekennzeichnet, dass** die Wasserabscheidekammer (27) wenigstens einen Notauslass (25) aufweist.

10. Wasserkasten nach einem der Ansprüche 1 bis 9, **dadurch gekennzeichnet, dass** er im Wesentlichen aus Kunststoff hergestellt ist.

11. Wasserkasten nach einem der Ansprüche 1 bis 10, **dadurch gekennzeichnet, dass** die Zuleitung (33) rohrförmig ausgebildet ist.

12. Kraftfahrzeug mit einem Wasserkasten nach einem der Ansprüche 1 bis 11, **dadurch gekennzeichnet, dass** der Wasserkasten (6, 6') mit einem Sauggebläse einer Klimaanlage (15) verbunden ist und dass mit der Klimaanlage (15) Luft durch die wenigstens eine Lufteinlassöffnung (7) ansaugbar ist.

13. Kraftfahrzeug nach Anspruch 12, **dadurch gekennzeichnet, dass** die Klimaanlage (15) an die Wasserabscheidekammer (27) angeschlossen ist.

14. Kraftfahrzeug nach Anspruch 12 oder 13, **dadurch gekennzeichnet, dass** die Klimaanlage (15) mit dem Fahrgastraum verbunden ist.

## Claims

1. Water box for a motor vehicle (1), with at least one air inlet opening (7) located at the top in the fitted position, and with a water separating chamber (27) which is connected to the air inlet opening (7) and which has a bottom wall (28), a side wall (29), a top wall (11), at least one water outlet opening (24) and at least one air outlet opening (38), wherein the at least one air inlet opening (7) is connected via at least one supply line (33) to the substantially closed water separating chamber (27), and wherein, downstream of the at least one air inlet opening (7), the supply line (33) has at least one pre-separating outlet (10) through which water can be conducted outside the substantially closed water separating chamber (27), **characterized in that**, at an opening (39') of the pre-separating outlet (10), the supply line (33) has a downwardly curved wall (34) at which water can be conducted downwards into the pre-separating outlet (10) in accordance with the Coandǎ effect.

2. Water box according to claim 1, **characterized in that** the at least one pre-separating outlet (10) is arranged in the supply line (33).

3. Water box according to claim 1 or 2, **characterized in that**, in the fitted position, the at least one air inlet opening (7) is arranged above the water separating chamber (27).

4. Water box according to one of claims 1 to 3, **characterized in that** the supply line (33") is formed by a first part being releasably connected to a second part (27") and this second part (27") substantially forms the water separating chamber.

5. Water box according to one of claims 1 to 4, **characterized in that** the supply line (33) is connected to the water separating chamber (27) at said side wall (29) and/or at said top wall (11).

6. Water box according to one of claims 1 to 5, **characterized in that**, at the pre-separating outlet (10), the supply line (33) has a barrier element (23) at which water is directed into the pre-separating outlet (10).

7. Water box according to one of claims 1 to 6, **characterized in that** at least one directing element (12) which projects into an interior (32) of the water separating chamber (27), is intended for diverting air and at which air flowing through the water separating chamber (27) is deflected is arranged on the top wall (11).

8. Water box according to claim 7, **characterized in that** the directing element (12) extends downwardly from the top wall (11) into said interior (32).

9. Water box according to one of claims 1 to 8, **characterized in that** the water separating chamber (27) comprises at least one emergency outlet (25).

10. Water box according to one of claims 1 to 9, **characterized in that** said water box is substantially produced from plastic.

11. Water box according to one of claims 1 to 10, **characterized in that** the supply line (33) is of tubular design.

12. Motor vehicle with a water box according to one of claims 1 to 11, **characterized in that** the water box (6, 6') is connected to a suction blower of an air conditioning system (15), and **in that** air can be sucked up through the at least one air inlet opening (7) by the air conditioning system (15).

13. Motor vehicle according to Claim 12, **characterized in that** the air conditioning system (15) is connected to the water separating chamber (27).

14. Motor vehicle according to Claim 12 or 13, **characterized in that** the air conditioning system (15) is connected to the passenger compartment.

## Revendications

1. Boîte d'eau pour un véhicule automobile (1) comprenant au moins une ouverture d'entrée d'air (7) située en haut dans la position d'installation, et une chambre de séparation d'eau (27) qui est connectée à l'ouverture d'entrée d'air (7) et qui présente une paroi de fond (28), une paroi latérale (29), une paroi de couverture (11), au moins une ouverture de sortie d'eau (24) et au moins une ouverture de sortie d'air (38), l'au moins une ouverture d'entrée d'air (7) étant connectée par le biais d'au moins une conduite d'alimentation (33) à la chambre de séparation d'eau essentiellement fermée (27) et après l'au moins une ouverture d'entrée d'air (7), la conduite d'alimentation (33) présentant au moins une évacuation de séparation primaire (10) à travers laquelle l'eau peut être évacuée hors de la chambre de séparation d'eau essentiellement fermée (27), **caractérisée en ce que** la conduite d'alimentation (33) présente, au niveau d'une ouverture (39') de l'évacuation de séparation primaire (10), une paroi (34) courbée vers le bas, le long de laquelle l'eau peut être évacuée vers le bas dans l'évacuation de séparation primaire (10) selon l'effet Coandǎ.

2. Boîte d'eau selon la revendication 1, **caractérisée en ce que** l'au moins une évacuation de séparation primaire (10) est arrangée dans la conduite d'alimentation (33).

3. Boîte d'eau selon la revendication 1 ou 2, **caractérisée en ce que** l'au moins une ouverture d'entrée d'air (7) est située en haut de la chambre de séparation d'eau (27) dans la position d'installation.

4. Boîte d'eau selon une des revendications 1 à 3, **caractérisée en ce que** la conduite d'alimentation (33") est formée par une première partie qui est connectée de façon amovible à une deuxième partie (27") et que cette deuxième partie (27") forme essentiellement la chambre de séparation d'eau.

5. Boîte d'eau selon une des revendications 1 à 4, **caractérisée en ce que** la conduite d'alimentation (33) est connectée à la chambre de séparation d'eau (27) au niveau de ladite une paroi latérale (29) et/ou ladite paroi de couverture (11).

6. Boîte d'eau selon une des revendications 1 à 5, **caractérisée en ce que** la conduite d'alimentation (33) présente un élément barrière (23) au niveau de l'évacuation de séparation primaire (10), le long duquel l'eau est guidée dans le l'évacuation de séparation primaire (10).

7. Boîte d'eau selon une des revendications 1 à 6, **caractérisée en ce qu'**au moins un élément conducteur (12) pénétrant dans un espace interne (32) de la chambre de séparation d'eau (27) est disposé au niveau de la paroi de couverture (11) pour dévier l'air, le long duquel l'air s'écoulant à travers la chambre de séparation d'eau (27) est dévié.

8. Boîte d'eau selon la revendication 7, **caractérisée en ce que** l'élément conducteur (12) s'étend depuis la paroi de couverture (11) vers le bas dans ledit espace interne (32).

9. Boîte d'eau selon une des revendications 1 à 8, **caractérisée en ce que** la chambre de séparation d'eau (27) présente au moins une sortie de d'urgence (25).

10. Boîte d'eau selon une des revendications 1 à 9, **caractérisée en ce qu'**elle est fabriquée essentiellement en polymère.

11. Boîte d'eau selon une des revendications 1 à 10, **caractérisée en ce que** la conduite d'alimentation (33) est conçue en forme de tuyau.

12. Véhicule automobile comprenant une boîte d'eau selon une des revendications 1 à 11, **caractérisé en ce que** la boîte d'eau (6, 6') est connectée à un ventilateur d'aspiration d'une installation de climatisation (15) et **en ce que** de l'air peut être aspiré avec l'installation de climatisation (15) à travers l'au moins une ouverture d'entrée d'air (7).

13. Véhicule automobile selon la revendication 12, **caractérisé en ce que** l'installation de climatisation (15) est raccordée à la chambre de séparation d'eau (27).

14. Véhicule automobile selon la revendication 12 ou 13, **caractérisé en ce que** l'installation de climatisation (15) est connectée à l'habitacle du véhicule.
